# EUROPÄISCHE PATENTANMELDUNG

(11) **EP 2 139 002 A1**
(43) Veröffentlichungstag der Anmeldung: **30.12.2009**
(21) Anmeldenummer: 08159233.9
(22) Anmeldetag: 27.06.2008
(51) Int. Cl.: G11B 7/085, G11B 7/09

(54) **Schwingarm-Aktuator für eine Abtasteinrichtung**

(71) Anmelder: Deutsche Thomson OHG, 30625 Hannover (DE)
(72) Erfinder: Bammert, Michael, 78739 Hardt (DE); Kernbach, Joachim, 78052 Villingen (DE); Khrushchev, Sergey, 78048 Villingen-Schwenningen (DE)
(74) Vertreter: Arnold, Klaus-Peter

(57) **Zusammenfassung**

Die Erfindung betrifft einen Schwingarm-Aktuator für eine optische Abtasteinrichtung, der einen als zweiarmiger Hebel ausgeführten Schwingarm aufweist, der zwischen den Hebelarmen um eine senkrecht zu diesem verlaufende Achse schwenkbar gelagert ist. Ein Hebelarm trägt endseitig einen Abtastkopf und weist einen elastisch biegbaren Bereich für eine Bewegung des optischen Kopfes in der Fokusierungsrichtung senkrecht zur Schwenkebene des Schwingarmes auf. Der andere Hebelarm ist mit einer Komponente eines Magnetantriebes für eine Schwenkbewegung um die Achse versehen. Zudem weist der Schwingarm-Aktuator einen Magnetantrieb für die Bewegung des optischen Kopfes in der Fokusierungsrichtung auf. Die Erfindung löst die Aufgabe, einen derartigen Schwingarm mit reduzierter Längserstreckung bei gewichtsreduzierter und einfacher Ausführung des den Abtastkopf tragenden Hebelarmes zu gestalten. Dazu ist der Magnetantrieb (5/ 7) für die Bewegung des optischen Kopfes (3) in der Fokusierungsrichtung (f) dem Hebelarm (II) zugeordnet, der eine Komponente (4) des Magnetantriebes für die Schwenkbewegung um die Achse (SA) aufweist, und dabei im Bereich des Schwenklagers angeordnet, das als magnetisches Lager (15) ausgebildet oder das von einem feststehenden Magnetringsegment (7) mit radialer Magnetisierung teilweise umschlossen ist.

## Beschreibung

Die Erfindung betrifft einen Schwingarm-Aktuator für eine Abtasteinrichtung mit einem Abtastkopf, vorzugsweise einem eine Fokuslinse aufweisenden optischen Kopf, zur Anordnung in einem Gerät zur Aufzeichnung und/ oder Wiedergabe von Informationen.

Ein in einer optischen Abtasteinrichtung angeordneter Aktuator mit einem eine Fokuslinse aufweisenden optischen Kopf dient der Emission eines Lichtstrahls (Laserstrahls) auf eine als Informationsträger ausgebildete optische Platte und dem Empfang des von dieser reflektierten Strahls. Die optische Platte wird dabei von einer Trägervorrichtung gehalten und zu einer Rotationsbewegung angetrieben. Der Aktuator kann als zweiarmiger Schwingarm-Aktuator ausgebildet sein, bei dem der optische Kopf an einem freien Ende angeordnet ist. Der Schwingarm ist um eine Achse schwenkbar und bewegt das Ende mit dem optischen Kopf in Form eines Bogens in einer zur Aufzeichnungsoberfläche der optischen Platte parallelen Ebene (Tracking) und ist mit seinem Kopf senkrecht zu dieser Ebene fokussierbar (Fokusing). Mit einem Schwingarm-Aktuator sind kurze Zugriffszeiten auf unterschiedliche Orte des Aufzeichnungsträgers zu erreichen.

Derartige Schwingarm-Aktuatoren sind beispielsweise in der US 2004/ 0148619 A1, der KR-A-1020060075386 und der DE 10 2006 026 315 A1 beschrieben.

Der Schwingarm-Aktuator nach der US 2004/0148619 A1 ist schwenkbar um eine Achse an einem Träger angeordnet und weist dazu an seinem dem optischen Kopf gegenüberliegenden Endbereich einen Magnetantrieb auf, der aus einer fest am Träger angeordneten Magnetanordnung und einer auf dem Schwingarm angeordneten Spule gebildet ist, deren Betriebsstrom gesteuert wird. Im Schwingarm ist auf der dem Magnetantrieb abgewandten Seite der Schwenkachse, also fokuslinsenseitig, ein elastischer Bereich (Blattfederanordnung) ausgebildet, der an seinem freien Ende den optischen Kopf trägt. Diesem elastischen Bereich, der vom übrigen Schwingarm teilumschlossen ist, ist kopfseitig ein zweiter, mit dem Schwingarm ausgebildeter Magnetantrieb zugeordnet, der das freie Ende und damit den Kopf in Fokusierungsrichtung bewegen kann. Als nachteilig kann angesehen werden, dass der kopfseitige Teil (Hebelarm) des Schwingarmes gewichtsintensiv ist, so dass eine Schwenkbewegung des Schwingarmes um die Achse mit einer erhöhten Trägheit desselben einhergeht.

Einen dicken- und trägheitsreduzierten Schwingarm-Aktuator beschreibt die KR 1020060075386 A. Bei diesem ist der kopfseitige Teil des Schwingarmes im Bereich der Schwenkachse scharniergelenkartig mit dem Teil des Schwingarmes verbunden, der dem Kopf abgewandt ist und die Spulenanordnung für den Magnetantrieb zur Erzeugung der Schwenkbewegung (Tracking) trägt. Im kopfseitigen Teil ist eine Ausnehmung ausgebildet, deren Randbereich mit einer Fokusspule versehen ist und in die ein Magnet zur Bildung eines Magnetantriebes für eine Bewegung des kopfseitigen Teils des Schwingarmes in der Fokusierungsrichtung mit Spiel hineinragt.

Die Anordnung der Fokusspule am kopfseitigen Teil des Schwingarmes, insbesondere im Bereich des optischen Kopfes, stellt eine zusätzliche Wärmequelle zur Laser-Optik, insbesondere bei Verwendung eines blauen Lasers, dar, die deren Lebensdauer reduzieren und auch zu Beschädigungen anderer optischer Bauteile, insbesondere deren Beschichtungen, führen kann.

Beim Schwingarm-Aktuator nach der DE 10 2006 026 315 A1 ist der Magnetantrieb für die Bewegung des Abtastkopfes, insbesondere optischen Kopfes, in der Fokusierungsrichtung der Seite des als zweiarmiger Hebel ausgeführten Schwingarmes zugeordnet, auf der auch der Magnetantrieb für die Bewegung des Kopfes in der Trackingrichtung ausgebildet ist. Zwischen den Hebelarmen ist der Schwingarm um eine senkrecht zu diesem verlaufende Achse schwenkbar gelagert, trägt auf der den Magnetantrieben abgewandten Seite endseitig den Abtastkopf und weist auf dieser Seite einen Gelenkbereich, vorzugsweise einen elastisch biegbaren Bereich, für eine Bewegung in der Fokusierungsrichtung senkrecht zur Schwenkebene auf. Durch diese Gestaltung kann der den Abtastkopf tragende Hebelarm einfach und ohne weitere Funktionselemente gewichtsreduziert ausgeführt werden. Allerdings erfordert die Anordnung der Fokusspule auf der Seite der Trackingspulen eine größere Längsertreckung des Schwingarmes und damit einen erhöhten Platzbedarf.

Es ist Aufgabe der Erfindung, einen Schwingarm-Aktuator für eine Abtasteinrichtung der vorbeschriebenen Art mit reduzierter Längserstreckung bei gewichtsreduzierter und einfacher Ausführung des den Abtastkopf tragenden Hebelarmes zu gestalten.

Diese Aufgabe wird bei einem Schwingarm-Aktuator durch die im Anspruch 1 angegebenen Merkmale gelöst. Vorteilhafte Ausgestaltungen sind in den Unteransprüchen aufgeführt.

Die Erfindung besteht in einem Schwingarm-Aktuator, der in bekannter Weise an einem Träger abgestützt und in der Art eines zweiarmigen Hebels ausgeführt ist, wobei die Abstützung zugleich eine Schwenkachse für den Schwingarm senkrecht zu diesem bildet. Ein Hebelarm trägt dabei endseitig einen Abtastkopf, insbesondere einen optischen Kopf mit einer Fokuslinse, und weist einen Gelenkbereich, vorzugsweise einen elastisch biegbaren Bereich, für eine Bewegung des Abtastkopfes senkrecht zur Schwenkebene des Schwingarmes auf (Fokusierungsrichtung). Der andere Hebelarm ist mit einer Komponente eines Magnetantriebes für eine Schwenkbewegung um die Achse (Trackingrichtung) sowie mit einer Komponente eines zweiten Magnetantriebes für die Bewegung des Abtastkopfes senkrecht zur Schwenkebene versehen, wobei die Komponenten vorteilhaft gedruckte Spulen sind. Dabei ist der zweite Magnetantrieb im Bereich des Schwenklagers angeordnet, das als magnetisches Lager ausgebildet oder das von einem gegenüber dem Träger drehfest angeordneten Magnetring mit radialer Magnetisierung oder einem Segment eines solchen zumindest teilweise umschlossen ist.

Durch die Verwendung eines magnetischen Lagers als Komponente des zweiten Magnetantriebes oder durch die Umschließung oder Teilumschließung eines konventionellen Lagers durch einen mit dem Träger fest verbundenen Magnetring kann der Magnetantrieb für eine Bewegung des optischen Kopfes senkrecht zur Schwenkbewegung auf der dem Abtastkopf abgewandten Seite zwischen dem Magnetantrieb für die Schwenkbewegung und dem Lager angeordnet bzw. mit diesem gebildet sein. Damit wird eine Verkürzung des dem Abtastkopf abgewandten Hebelarmes erreicht und damit auch des gesamten Schwingarmes. Dieses wiederum unterstützt vorteilhaft eine Miniaturisierung von Endgeräten. Zudem ergeben sich eine Gewichts- und eine Materialeinsparung sowie eine Verringerung der Trägheit des Schwingarm-Aktuators, was wiederum mit kürzeren Zugriffszeiten auf unterschiedliche Orte eines Aufzeichnungsträgers einhergeht.

Bevorzugt ist der torsionssteife Schwingarm so ausgeführt, dass der den optischen Kopf tragende und einen Gelenkbereich, vorzugsweise einen elastisch biegbaren Bereich, aufweisende Hebelarm mit einem Lagerelement, vorzugsweise einer Lagerbuchse, drehfest verbunden ist, wobei dieses Lagerelement im Eingriff mit einem am Träger für den Schwingarm fest angeordneten Gegenlagerelement steht und eine Schwenkbewegung um die (Lager- bzw. Schwenk-) Achse ermöglicht, und dass der andere Hebelarm im Bereich zwischen dem optischen Kopf und dem Gelenkbereich fest mit diesem Hebelarm verbunden und auf der dem optischen Kopf abgewandten Seite des Gelenkbereiches frei schwebend ausgebildet ist. Die beiden Magnetantriebe sind dem frei schwebenden Hebelarm zugeordnet.

Zur Bildung des Magnetantriebes für eine Bewegung in der Fokusierungsrichtung kann der frei schwebende Hebelarm auf seiner dem Abtastkopf abgewandten Seite lagerseitig eine kreisbogenförmige Ausnehmung aufweisen, deren Krümmungsmittelpunkt die Schwenkachse ist und die auf der Ober- und auf der Unterseite jeweils von einer gedruckten Spule umgeben ist. In diese Ausnehmung greift ein mit dem magnetischen Lager bzw. dem Magnetring fest verbundenes und ebenso gekrümmtes Rückschlusselement mit Spiel ein, um eine Schwenkbewegung des Schwingarmes um die Schwenkachse zu ermöglichen. Das Rückschlusselement bestimmt dabei zugleich die maximale Schwenkbewegung.

Der Magnetantrieb für eine Schwenkbewegung des Schwingarmes ist in bekannter Weise aus wenigstens einem fest am Träger und im Abstand zur Achse des Schwingarmes angeordneten Magneten und jeweils wenigstens einer auf der Ober- und auf der Unterseite des frei schwebenden Hebelarmes angeordneten und diesem zugeordneten gedruckten Spule als Trackingspule gebildet. Dabei kann dieser Magnetantrieb auf der dem Lager abgewandten Seite des Magnetantriebes für die Fokusierungsbewegung angeordnet sein. Es können aber auch zwei solcher Magnetantriebe angeordnet sein, die beidseits des Schwenklagers im Abstand von der Längsachse des Schwingarmes ausgebildet sind. Der Vorteil dieser Anordnung besteht in einer weiteren Verkürzung des frei schwebenden Hebelarmes.

Bei Stromdurchgang durch die jeweiligen Spulen wird eine Schwenkbewegung in eine vorbestimmte Schwenkrichtung (Trackingrichtung) um die Schwenkachse bzw. eine Bewegung des mit dem optischen Kopf versehenen Hebelarmbereiches (Fokusierungsrichtung) um den Gelenkbereich veranlasst. Gedruckte Spulen lassen sich präzise positionieren und verbessern wegen ihres höheren Elastizitätsmoduls und geringerer Eigenfrequenzen gegenüber herkömmlichen Spulen, die zudem in höheren Frequenzbereichen liegen, das Resonanzverhalten. Durch die Anordnung von gedruckten Spulen kann auch die Bauhöhe des Schwingarm-Aktuators verringert werden.

Der Gelenkbereich in dem den optischen Kopf tragenden Hebelarm ist vorteilhaft durch eine Dickenreduzierung desselben gegeben, die so getroffen ist, dass der Hebelarm trotz der festen Verbindung mit dem frei schwebenden anderen Hebelarm ohne elektromagnetische Krafteinwirkung biegesteif ist.
Bevorzugt ist der Schwingarm in seinem Schwerpunkt schwenkgelagert. Diese Lagerung macht den biege- und torsionssteif ausgeführten Schwingarm stoßfest.

Der frei schwebende Hebelarm ist auf seiner dem optischen Kopf abgewandten Seite vorteilhaft kreisbogenförmig gestaltet, wobei der Kreismittelpunkt die Schwenkachse ist. Diese optimierte Ausbildung ist mit einer Material- und Gewichtsersparnis verbunden und trägt zur Trägheitsreduzierung des Schwingarmes bei.

Die Erfindung wird nachstehend anhand von Ausführungsbeispielen erläutert. In den zugehörigen Zeichnungen zeigen schematisch:
- Fig. 1:: eine perspektivische Draufsicht eines Schwingarm-Aktuators mit Spulen- und Magnetanordnung in einer ersten Ausführung,
- Fig. 2:: eine Längsschnitt-Darstellung des Schwingarm-Aktuators, perspektivisch,
- Fig. 3:: den längsgeschnittenen Schwingarm-Aktuator in Anordnung auf einem Träger,
- Fig. 4:: einen längsgeschnittenen Schwingarm-Aktuator in einer zweiten Ausführung in Anordnung auf einem Träger,
- Fig. 5:: eine Unteransicht des die Spulen tragenden Hebelarmes des Schwingarmes nach Fig. 4 mit einer Magnetanordnung,
- Fig. 6:: eine perspektivische Draufsicht eines Schwingarm-Aktuators in einer dritten Ausführung und
- Fig. 7:: eine perspektivische Unteransicht des Schwingarm-Aktuators nach Fig. 6.

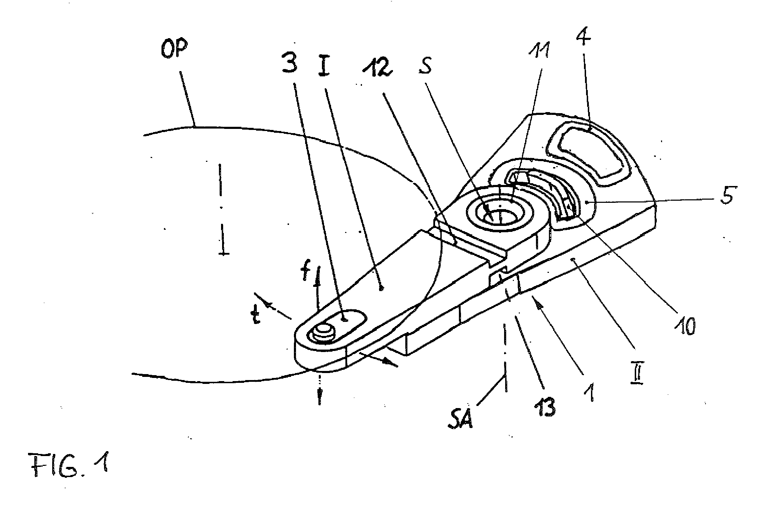

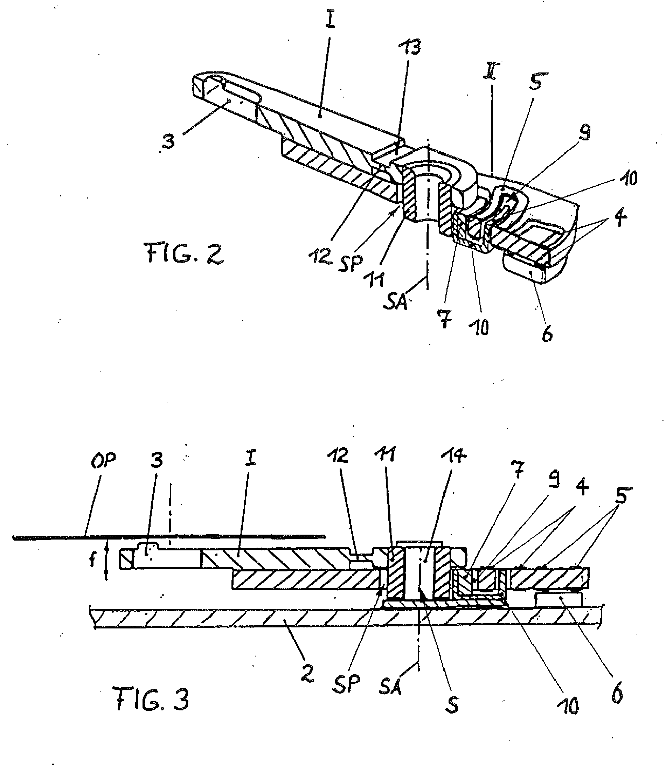

Der in den Fig. 1 bis 3 gezeigte Schwingarm-Aktuator für eine nicht dargestellte optische Abtasteinrichtung weist einen torsionssteifen Schwingarm 1 auf, der in der Art eines zweiarmigen Hebels gestaltet und in seinem Schwerpunkt S zwischen den Hebelarmen I und II an einem Träger (2, Fig. 3) um eine senkrecht zum Schwingarm verlaufende Schwenkachse SA schwenklagerbar ist. Der Hebelarm I trägt endseitig einen optischen Kopf 3 mit einer Fokuslinse. An dem anderen Hebelarm II sind zwei gedruckte Spulenanordnungen 4 und 5 angeordnet, die mit diesen zugeordneten trägerfesten Magneten 6 und 7 in Wirkverbindung stehen und mit diesen (6, 7) Magnetantriebe für den Schwingarm 1 ausbilden. Mit OP ist eine optische Platte angedeutet, der der optische Kopf 3 zugeordnet ist.

Die Fig. 2 und 3 zeigen die Anordnung und Ausbildung der beiden Magnetantriebe. Der mit der Spulenanordnung 4, die auf der Ober- und auf der Unterseite des Hebelarmes II jeweils eine koaxial zur Schwenkachse verlaufende Spule 4 aufweist, und zwei symmetrisch nebeneinander angeordneten Magneten 6, von denen nur einer zu sehen ist, gebildete erste Magnetantrieb (4/ 6) dient der Erzeugung einer Schwenkbewegung des Schwingarmes 1 um die Schwenkachse SA (Trackingrichtung, radial zur optischen Platte OP). Der zweite Magnetantrieb (5/ 7) ist zwischen dem ersten Magnetantrieb (4/ 6) und dem Schwenklager ausgebildet und bewirkt eine Bewegung des Schwingarmes 1 senkrecht zur Schwenkebene in Fokusierungsrichtung (f).

Zur Bildung dieses zweiten Magnetantriebes (5/ 7) weist der freischwebende Hebelarm II auf seiner dem optischen Kopf 3 abgewandten Seite schwenklagerseitig eine kreisbogenförmige Ausnehmung 9 mit der Schwenkachse SA als Krümmungsachse auf, die an der Ober- und der Unterseite jeweils von einer gedruckten Spule 5 umgeben ist. In die Ausnehmung 9 greift ein Schenkel eines U-förmigen und mit dem Magneten 7 verbundenen Jochs 10 berührungslos ein, wobei der Magnet 7 am lagerseitigen Schenkel des Jochs 10 auf der dem Schwenklager abgewandten Seite angeordnet ist und ein radial magnetisiertes Ringsegment darstellt.

Der den optischen Kopf 3 tragende Hebelarm I ist mit einer Lagerbuchse 11, die im bzw. um den Schwerpunkt S des Schwingarmes 1 angeordnet ist, drehfest verbunden und weist für eine Bewegung dieses Kopfes 3 in der Fokusierungsrichtung f senkrecht zur Schwenkebene einen elastisch biegbaren Bereich 12 auf. Mit diesem Hebelarm I ist der Hebelarm II im Bereich zwischen dem optischen Kopf 3 und dem Bereich 12 fest verbunden, ausschließlich in diesem Bereich gehaltert und somit auf der dem optischen Kopf 3 abgewandten Seite des biegbaren Bereiches 12 frei schwebend. Der Bereich 12 ist durch eine an der Unterseite und der Oberseite des Hebelarmes I eingebrachte Nut 13 gegenüber der Dicke dieses Hebelarmes I erheblich reduziert und dabei in seiner Dicke derart ausgelegt, dass der kopfseitige Teil des ansonsten biegesteifen Hebelarmes I bei einer Beaufschlagung des Hebelarmes II durch den zweiten, mit dem Magneten 7 gebildeten Magnetantrieb in Fokusierungsrichtung (f) bewegt wird. Über die feste Verbindung der beiden Hebelarme I und II wird auch die Schwenkbewegung des Hebelarmes I um die Schwenkachse SA infolge einer Schwenkbewegung des Hebelarmes II durch den ersten, mit dem Magneten 6 gebildeten Magnetantrieb und damit also eine Schwenkbewegung des gesamten Schwingarmes 1 bewirkt.

Fig. 2 zeigt insbesondere die Ausbildung und Anordnung des Magneten 6 bezüglich der Spule 4 und die freischwebende Anordnung des Hebelarmes II, die durch ein Spiel SP gegenüber der Lagerbuchse 11 gekennzeichnet ist.

In Fig. 3 ist die Anordnung und Lagerung des Schwingarmes 1 an einem Träger 2 dargestellt. An diesem (2) ist ein Lagerzapfen 14 fest angeordnet, an dem der Schwingarm 1 mit der Lagerbuchse 11 drehbar gelagert ist. Die dem Schwingarm 1 und dessen optischen Kopf 3 zugeordnete optische Platte OP befindet sich in Parallelanordnung zu diesem. Durch eine Schwenkbewegung des Schwingarmes 1 um die Schwenkachse SA wird der optische Kopf 3 radial zu Platte OP bewegt (Fig. 1, Trackingrichtung t). Die Fokusierung eines bestimmten Punktes auf der Platte OP wird durch eine Bewegung des Hebelarmes II und damit des optischen Kopfes 5 in Fokusierungsrichtung f senkrecht zur Trackingrichtung t ermöglicht.

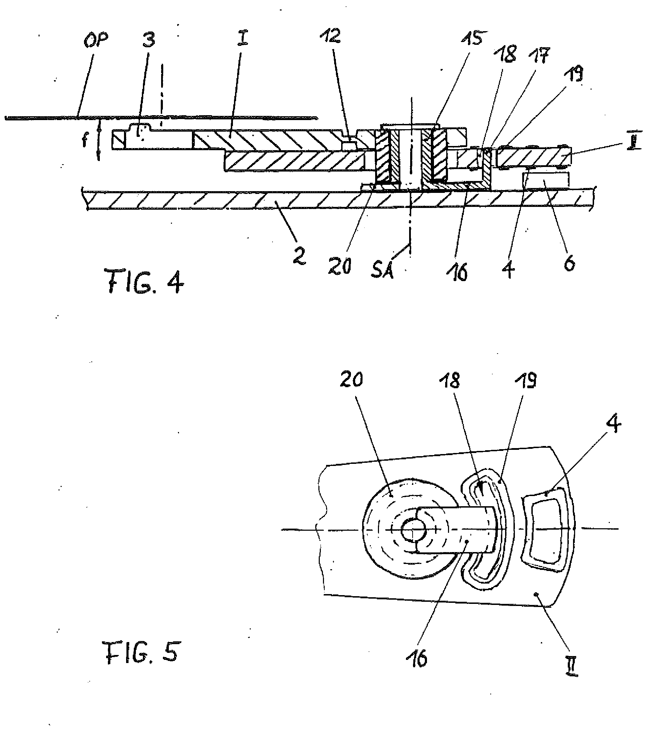

Die in den Fig. 4 und 5 gezeigte Ausführung unterscheidet sich von der vorbeschriebenen durch die Gestaltung des Schwenklagers und hinsichtlich der Ausbildung des Magnetantriebes für die Bewegung in der Fokusierungsrichtung f. Dabei ist das Schwenklager als magnetisches Lagers ausgebildet, wobei der Lagerzapfen 15 ein ringförmiger Hohlzylinder ist, der in radialer Richtung magnetisiert ist. Dieser magnetisierte Lagerzapfen 15 ist nach der dem optischen Kopf 3 abgewandten Seite mit einem Magnetjoch 16 versehen, das mit einem Schenkel 17 in eine im Hebelarm II eingebrachte kreisbogenförmige Ausnehmung 18 berührungslos eingreift, die an der Ober- und Unterseite jeweils von einer gedruckten Spule 19 umgeben ist. Zur Befestigung des Lagerzapfens 15 auf dem Träger 2 ist dieser trägerseitig mit einem Befestigungsflansch 20 aus Kunststoff versehen, in den das Magnetjoch 16 integriert ist.

Diese Magnetantriebsausbildung und -anordnung führt zu einer Verkürzung des Hebelarmes II gegenüber der vorbeschriebenen Ausführung.

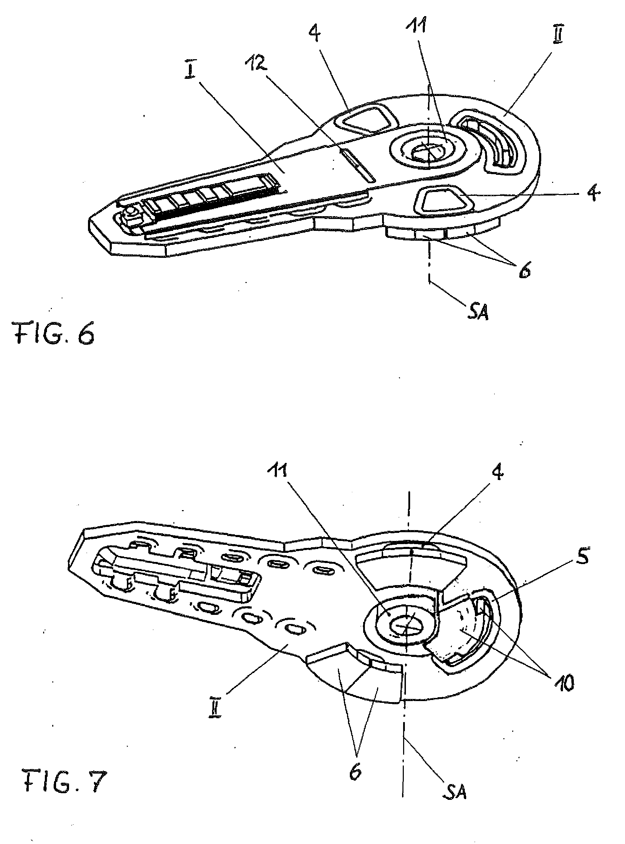

Die in den Fig. 6 und 7 gezeigte Ausführung eines Schwingarmaktuators unterscheidet sich von der erstbeschriebenen dadurch, dass der Magnetantrieb 4, 6 für eine Schwenkbewegung des Schwingarmes 1 um die Schwenkachse SA aus beidseits des Schwenklagers im Abstand von der Längsachse des Schwingarmes 1 angeordneten Magneten 6 und jeweils einer auf der Ober- und Unterseite des Hebelarmes II angeordneten Spule 4 gebildet ist. Dabei sind auf jeder Seite zwei Magnete 6 angeordnet, um die Empfindlichkeit des Antriebes zu erhöhen. Diese Ausführung führt zu einer erheblichen Verkürzung des Hebelarmes II. Selbstverständlich kann der Magnetantrieb für eine Bewegung in der Fokusierungsrichtung f auch mit einem magnetischen Lager gebildet werden, wie es in den Fig. 4 und 5 gezeigt ist.

### BEZUGSZEICHENLISTE

- 1: Schwingarm
- 2: Träger
- 3: optischer Kopf
- 4: Spule
- 5: Spule
- 6: Magnet
- 7: Magnet
- 8: -
- 9: Ausnehmung
- 10: Joch
- 11: Lagerbuchse
- 12: biegbarer Bereich
- 13: Nut
- 14: Lagerzapfen
- 15: Lagerzapfen
- 16: Magnetjoch
- 17: Schenkel
- 18: Ausnehmung
- 19: Spule
- 20: Befestigungsflansch
- I: Hebelarm
- II: Hebelarm
- f: Fokusierungsrichtung
- t: Trackingrichtung
- OP: optische Platte
- S: Schwerpunkt
- SA: Schwenkachse
- SP: Spiel

## Patentansprüche

1. Schwingarm-Aktuator für eine Abtasteinrichtung, mit einem als zweiarmiger Hebel ausgeführten Schwingarm (1), der zwischen den Hebelarmen (I, II) um eine senkrecht zu diesem verlaufenden Achse (SA) schwenkbar gelagert ist, wobei ein Hebelarm (I) endseitig einen Abtastkopf (3) trägt und einen Gelenkbereich (12) für eine Bewegung des Abtastkopfes (3) senkrecht zur Schwenkebene aufweist und der andere Hebelarm (II) mit einer Komponente (4) eines ersten Magnetantriebes (4/ 6) für eine Schwenkbewegung um die Achse (SA) sowie mit einer Komponente (5) eines zweiten Magnetantriebes (5/ 7) für die Bewegung des Abtastkopfes (3) senkrecht zur Schwenkebene versehen ist, und wobei der zweite Magnetantrieb (5/ 7) im Bereich des Schwenklagers angeordnet ist, das als magnetisches Lager (15) ausgebildet oder das von einem feststehenden Magnetringsegment (7) mit radialer Magnetisierung teilweise umschlossen ist.

2. Schwingarm-Aktuator nach Anspruch 1, **dadurch gekennzeichnet, dass** der den Abtastkopf (3) tragende Hebelarm (I) mit einem Lagerelement (11) drehfest verbunden ist, das eine Schwenkbewegung um die Achse (SA) ermöglicht, und dass der Hebelarm (II) im Bereich zwischen dem optischen Kopf (3) und dem elastisch biegbaren Bereich (12) des Hebelarmes (I) fest mit diesem Hebelarm (I) verbunden und auf der dem optischen Kopf (3) abgewandten Seite des Bereiches (12) freischwebend ist.

3. Schwingarm-Aktuator nach Anspruch 2, **dadurch gekennzeichnet, dass** der Gelenkbereich (12) ein elastisch biegbarer, im Längsschnitt des Hebelarmes (I) dickenreduzierter Bereich ist und insbesondere aus dem gleichen Material wie der Hebelarm (II) besteht.

4. Schwingarm-Aktuator nach Anspruch 2, **dadurch gekennzeichnet, dass** der Schwingarm (1) in seinem Schwerpunkt (S) gelagert ist.

5. Schwingarm-Aktuator nach Anspruch 2, **dadurch gekennzeichnet, dass** das Lagerelement eine Lagerbuchse (11) ist, die mit einem am Träger (2) fest angeordneten Lagerzapfen (14) drehbeweglich im Eingriff steht.

6. Schwingarm-Aktuator nach Anspruch 2 oder 3, **dadurch gekennzeichnet, dass** der freischwebende Hebelarm (II) zur Bildung des Magnetantriebes für eine Fokusbewegung auf seiner dem Abtastkopf (3) abgewandten Seite lagerseitig eine kreisbogenförmige Ausnehmung (9, 18) aufweist, deren Krümmungsachse die Schwenkachse (SA) ist und die auf der Ober- und auf der Unterseite jeweils von einer gedruckten Spule (5) umgeben ist, in die ein mit dem magnetischen Lager (15) bzw. dem Magnetringsegment (7) fest verbundenes Rückschlusselement (10, 16) mit Spiel eingreift, das zugleich die maximale Schwenkbewegung des Schwingarmes (1) bestimmt.

7. Schwingarm-Aktuator nach einem oder mehreren der vorhergehenden Ansprüche, **dadurch gekennzeichnet, dass** der Magnetantrieb (4/ 6) für eine Schwenkbewegung des Schwingarmes (1) aus wenigstens einem fest am Träger (2) und im Abstand zur Achse (SA) des Schwingarmes (1) angeordneten Magneten (6) und jeweils wenigstens einer auf der Ober- und auf der Unterseite des freischwebenden Hebelarmes (II) angeordneten und diesem zugeordneten gedruckten Spule (4) als Trackingspulen gebildet ist.

8. Schwingarm-Aktuator nach Anspruch 7, **dadurch gekennzeichnet, dass** jeweils wenigstens ein Magnet (6) und jeweils wenigstens eine auf der Ober- und Unterseite des Hebelarmes (II) angeordnete Spule (4) beidseits des Schwenklagers im Abstand von der Längsachse des Schwingarmes (1) zur Bildung des Magnetantriebes (4/ 6) vorgesehen sind.

9. Schwingarm-Aktuator nach einem oder mehreren der vorhergehenden Ansprüche, **dadurch gekennzeichnet, dass** dieser und eine mit diesem gebildete optische Abtasteinrichtung in einem Gerät zum Lesen und/ oder Schreiben optischer Speichermedien verwendet wird.
